# EUROPEAN PATENT SPECIFICATION

(11) **EP 1 062 997 B1**
(45) Date of publication and mention of the grant of the patent: **09.07.2008**
(21) Application number: 00110923.0
(22) Date of filing: 24.05.2000
(51) Int. Cl.: B01D 46/02

(54) **Device for the separation of solid particles from air on sleeve filters**
Vorrichtung zur Trennung fester Partikel aus Luft an Filterschläuchen
Dispositif pour la séparation de particules solides de l'air sur des filtres à manche

(30) Priority: 28.05.1999 IT MI991183
(43) Date of publication of application: 27.12.2000
(73) Proprietor: WORKMEC S.r.l., 20040 Porto d'Adda (Milano) (IT)
(72) Inventor: Bruno, Alfredo, 20040 Cornate D'Adda (Milano) (IT)
(74) Representative: Pipparelli, Claudio

(56) References cited:
- DE-U- 8 003 027
- FR-A- 2 625 916
- GB-A- 2 047 114
- US-A- 4 073 632

## Description

The present invention relates to an apparatus for separating solid materials from air by means of filtering and, in particular, relates to filtering devices that use sleeve filters.

In these devices, the air to be filtered is made to pass by aspiration through the surface of tubular elements called sleeve filters which are made of a fabric filtering material and are closed at one extremity, so that the solid particles are deposited on the external walls of said sleeves.

The open extremity of these sleeve filters is inserted with an airtight seal into an opening in a tube plate that delimits the environment into which the filtered air passes. To ensure the sleeve filter remains tubular in shape during operation and to prevent the collapse of the same, a rigid metal wire frame is inserted into the sleeve; this cage frame must also be fixed to the tube plate.

The system of fixing the sleeve filter and the cage frame to the tube plate requires particular care in as far as it must, on the one hand, guarantee an airtight seal and prevent the formation of preferential pathways for air to pass without being filtered and, on the other, allow rapid dismantling of the system for routine maintenance or substitution of the sleeve filters in the case of wearing-out or breakup of the same sleeve.

The sleeve filter and the cage frame are generally fixed to the tube plate by a locking means comprising clips and bolts that acts on the reverse edge of the open extremity of the sleeve filter and on the edge or flange of the cage frame.

The seal is thus guaranteed by the pressure exerted on the edge of the sleeve filter; the sleeve must therefore be fitted in a uniform way, which requires particular care and attention both in assembly and in maintenance and repair.

To facilitate the achievement of the seal between the sleeve filter and the edge of the opening of the tube plate, sleeve filters have been proposed whose open extremity presents a thickened edge or cuff. The flange of the cage frame is substantially semicircular in section, and adheres to the cuff surface of the sleeve filter.

The pressure exerted on the semicircular-section flange of the cage frame compresses the cuff against the edge of the opening of the tube plate into which the sleeve filter has been inserted and ensures the seal. Even with this solution, the operations of assembling and dismantling the filtering system are difficult and complex (though to a lesser degree) in as much as the pressures -- always exerted by means of clips and bolts -- must be evenly distributed along the edge of the opening in the plate.

To obviate the drawbacks of the systems described above, a system for fixing the sleeve filter to the tube plate has been proposed recently that does not use clips and bolts, but provides for the use of an elastic ring (snap ring), normally made of steel, inserted inside the edge of the open extremity of the sleeve filter, for instance by means of stitching. The diameter of the ring is substantially equal to that of the opening in the tube plate and there is a groove along the entire external circumference of the ring equal to the thickness of the tube plate. Therefore, once the upper part of the sleeve filter and the cage frame are inserted into the opening of the tube plate by means of deformation of the elastic ring, the latter reasserts its shape and compresses the sleeve against the edge of the opening.

An example of this system is described and illustrated in the German Model G 80 03 027.9. Said publication shows a filtering device comprising a sleeve filter and an anti-collapse cage frame inserted thereto, said cage frame being substantially constituted by a flanged cylindrical body provided on its external surface with a circumferential relief protruding from said external surface in correspondence of the lower surface of a metal plate provided with an opening in which said filter device is inserted, passing from the upper surface to the lower one. In this way said relief is able to make a seal airtight between the sleeve filter and the plate by locking said filter against the lower edge of said opening.

The body is circumferentially interrupted in order to consent a lowering of its diameter to pass through the plate opening whereas a ring inserted in the upper portion of the body, when the filter is in operating position, maintains said upper portion of the body to its maximum diameter and compress the corresponding portion of the sleeve filter against the edge of said opening on the plate, avoiding any unwanted sliding of the body out of the plate opening.

This solution eliminates the need to apply systems of attachment using clips or flanges and bolts, but does not provide sufficient locking for the cage frame, which is left with the upper flange edge simply resting on the tube plate.

The present state of the art does not provide filtering devices with sleeve filters and anti-collapse or cage frames in which said cage frames and sleeve filters guarantee perfect fixing of the cage frame and at the same time can be fitted and fixed onto tube plates without recourse to locking systems of flanges, clips and bolts.

Therefore, the purpose of the present invention is to propose a device for filtering air in order to remove solid particles therein contained, of the sleeve filter type, in which the seal between the sleeve filter and the tube plate into which the sleeve filter is inserted is achieved without recourse to locking or fixing systems constituted by clips or flanges and bolts, but still guarantees perfect attachment of the anti-collapse or cage frame arranged inside the sleeve filter.

A second purpose of the present invention is to propose an anti-collapse or cage frame to be used in the filtering device referred to above.

The purposes of the present invention are achieved by using a cage frame that presents at least one series of elastic prominences in the upper cylindrical part, disposed substantially equidistant from the upper extremity of the cage frame; said series of elastic prominences, by means of the locking of the same against the lower edge of the opening of the plate, compress the sleeve filter against the edge of the tube plate thus making the seal airtight and locking the cage frame.

Advantageously, the number of elastic prominences that constitute the series of elastic prominences is at least equal to two and preferably more than three.

The locking of the elastic prominences against the lower edge of the opening of the tube plate can be achieved by means of the elastic return of the prominence after deformation due to the insertion of the cage frame and of the sleeve filter into the opening in the tube plate.

The locking of the elastic prominences against the lower edge of the opening of the tube plate is preferably achieved using a rigid body sliding along the inside upper surface of the cage frame opposite that surface in contact with the sleeve filter, which pushes the prominences of the cage frame compressing the sleeve filter against the edge of the tube plate and maintains it locked in said position.

The upper part of the anti-collapse or cage frame of the sleeve filter that presents the prominences, could be constituted by a metal wire structure like the rest of the cage frame, or, preferably could be achieved with a rolled sheet metal cylinder and be connected with the lower part, also cylindrical but presenting large areas of empty space to allow the passage of the air through the sleeve filter.

The prominences on the upper part of the cage frame could take any shape and could constitute one series or more than one series, said series could cooperate with one or more than one. Said prominences could be achieved by cutting into the material that constitutes the upper part of the cage frame or by attachments to said upper parts by means of welding or other known systems.

Preferably the cage frame presents a first series of prominences that begin substantially at the level of the open extremity of the same and reach their maximum after a distance substantially equal to the thickness of the tube plate so that the tube plate could be locked between the flanged extremity of the cage frame and the portion of surface after the prominence.

Alternatively, there could be more locking positions provided on a prolongation of the opening of the tube plate that engage with a plurality of series of prominences provided in the upper part of the cage frame.

Preferably, the locking is constituted by the edge of the tube plate.

The rigid element that is made to slide inside the upper part of the cage frame is constituted by a rigid body, i.e. with greater resistance to deformation than the material of the prominences provided in the upper portion of the cage frame.

It is preferably a metal cylinder open at both extremities, whose diameter is slightly less than that of the opening of the tube plate into which the sleeve filter must be inserted. The length of the rigid element is at least equal to the thickness of the tube plate. Preferably, said length is at least two or three times the thickness of the tube plate. Furthermore, it is advantageous that the upper part of said rigid cylindrical element ends in a flanged edge that facilitates the assembly of the cage frame and the sleeve filter into the opening of the tube plate. Although not preferred, the rigid element could be constituted by rings rigidly interconnected by means of rods welded inside each ring.

The invention will now be described in detail with the help of the attached figures and by reference to some embodiments by way of example and not of limitation of the scope of the invention.

Figure 1 is a front view, partially in section, of an anti-collapse or cage frame used in the present invention that presents the prominences in the upper part.

Figure 2 shows the same cage frame of Figure 1 together with the sleeve filter fixed to the tube plate.

Figures 3A and 3B show the assembly of the sleeve filter according to the invention.

Figures 4A, 5A and 6A show three different profiles of the prominences on the upper part of the cage frames used according to the present invention, while Figures 4B, 5B and 6B respectively show the profiles that the upper parts of the cage frames assume after insertion into the tube plate.

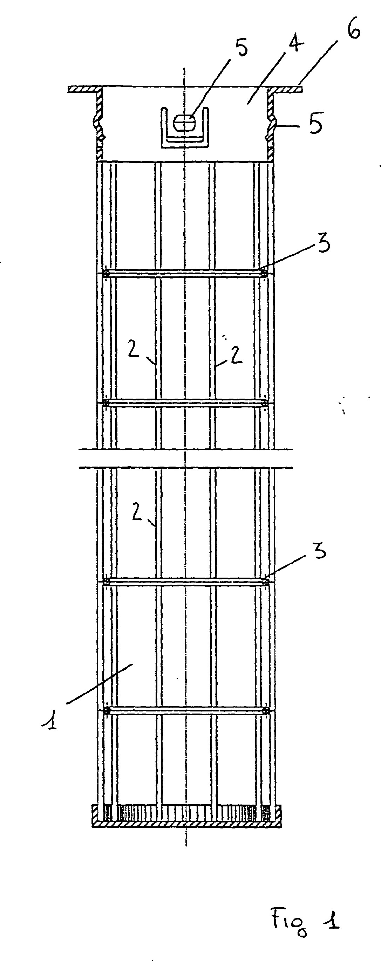

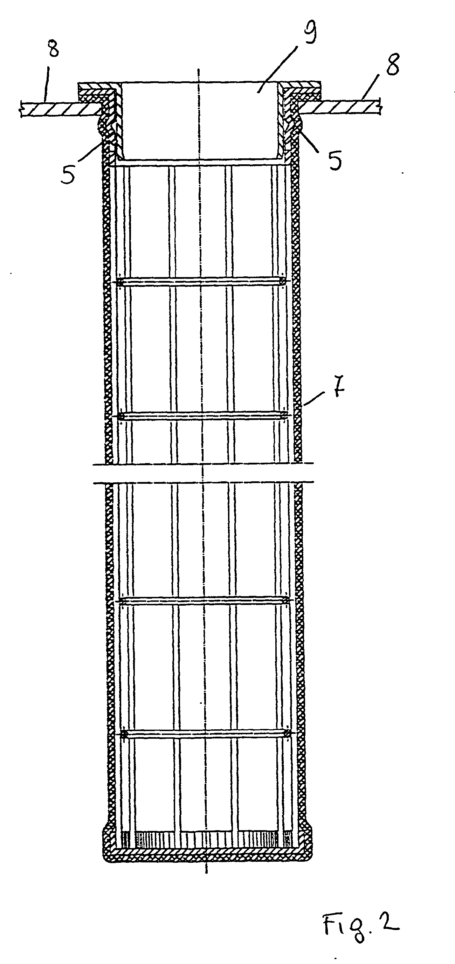

In Figures 1 and 2 the cage frame 1 (indicated in its entirety) is constituted by vertical metal rods 2 fixed to spaced horizontal rings 3.

The upper cage frame finishes in a collar 4 that presents one or more prominences 5 and a flange edge 6.

The cage frame constitutes a support frame for the sleeve filter 7 (Figure 2) that is fixed to the tube plate 8 by insertion of the rigid cylindrical element 9 inside the upper part of the cage frame 1.

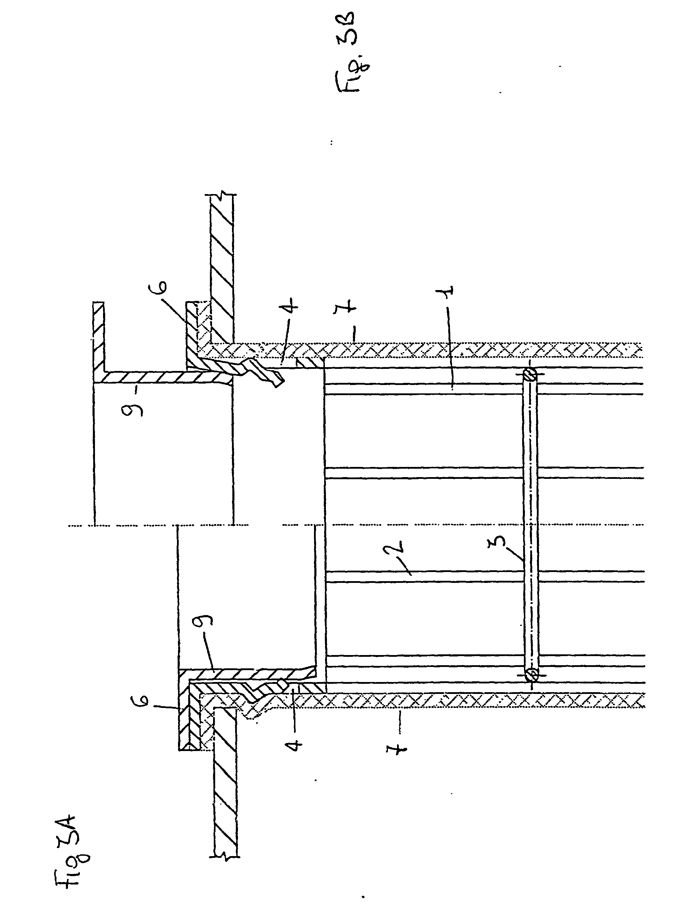

Figures 3A and 3B show schematically the procedure for inserting the rigid element for fixing the sleeve filter, in particular in Figure 3A the rigid element 9 in the course of its insertion into the collar 4 presses on the prominence 5 that, deforming, assumes the locked position against the lower edge of the opening of the tube plate as indicated in Figure 3B.

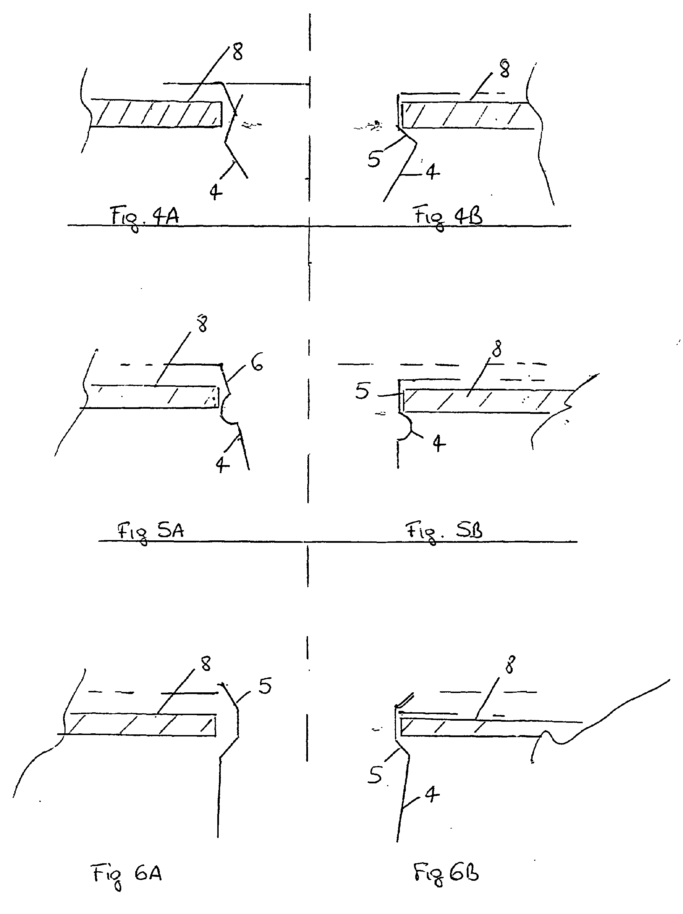

Figures 4A, 5A and 6A show some profiles that the collars 4 of the cage frames could present together with the sleeve filter (not shown), in order to lock against the tube plate 8.

Figures 4B, 5B and 6B show, respectively, the profiles of the cage frames locked against the tube plate.

## Claims

1. Filtering device to filter air in order to remove solid particles therein contained, comprising a tube plate (8) and a sleeve filter (7) supported by an anti-collapse cage frame (1) said cage frame being provided at its upper extremity with a flanged collar (4) to press the sleeve filter against the upper surface of the edge of an opening in said tube plate (8) into which said sleeve filter is inserted, **characterized in that** said collar (4) comprises at least one series of elastically deformable prominences (5) cut into the material of said collar (4) at a distance from of said cage frame (1) so that, after insertion of said cage frame and of the sleeve filter into said opening in said tube plate (8), they (5) press the sleeve filter (7) against the edge of said opening and lock the same against the lower surface of said edge of said opening in the tube plate by means of the elastic return of said prominences deformed due to said insertion of said cage frame and of the sleeve filter into said opening.

2. Device according to Claim 1 **characterized by** said series of prominences (5) comprising at least three prominences.

3. Device according to Claim 2 **characterized by** said series of prominences (5) comprising an equal number of diametrically opposed prominences.

4. Device according to Claim 1 **characterized by** said prominences (5) beginning substantially at the level of the open extremity of the collar and reaching their maximum diameter after a distance substantially equal to the thickness of the tube plate (8) so that the tube plate can be locked between the flanged extremity of the collar (4) and a surface portion of the prominence.

5. Device according to Claim 1, **characterized by** said collar (4) comprising a structure achieved by a metal sheet rolled to form a cylinder.

6. Device according to claim 1, **characterized by** comprising a rigid element (9) sliding along the inside of the collar (4) on the upper surface opposite the surface in contact with the sleeve filter (7) in order to push against the prominence (5) of the collar (4) so as to press the sleeve filter (7) against the edge of the tube plate (8) and to maintain it locked in said position.

7. Device according to claim 6, **characterized by** said rigid element (9) comprising a body with very much more resistance to deformation than that of the prominences (5) present in the upper portion of the collar. (9)

8. Device according to Claim 7 **characterized by** said rigid element (9) being a metal cylinder open at both extremities whose diameter is slightly less than that of the opening of the tube plate (8) into which the sleeve filter (7) must be inserted and whose length is at least equal to the thickness of said tube plate.

9. Anti-collapse cage frame (1) for use in the filtering device of claims 1 - 8 comprising a sleeve filter (7) and an anti-collapse cage frame (1) inserted in it, said anti-collapse cage frame comprising a lower structure of metal rod and an upper collar (4), **characterized in that** the collar (4) is provided with at least one series of elastically deformable prominences (5) cut into the material of said collar (4) at a distance from the upper flanged collar at the upper extremity of the cage frame (1) and protruding from the external surface of said collar (4) to ensure in use an air-tight seal of the sleeve filter within an opening of a filter plate.

## Patentansprüche

1. Filtervorrichtung zum Filtern von Luft, um darin enthaltene feste Teilchen zu entfernen, aufweisend einen Rohrboden (8) und einen Stülpfilter (7), die von einem Antikollabier-Käfigrahmen (1) gestützt werden, wobei der Käfigrahmen an seinem oberen Ende mit einem angeflanschten Kragen (4) ausgestattet ist, um den Stülpfilter gegen die obere Oberfläche des Rands einer Öffnung im Rohrboden (8) zu drücken, in welchen der Stülpfilter eingesetzt ist, **dadurch gekennzeichnet, dass** der Kragen (4) zumindest eine Reihe von elastisch verformbaren Vorsprüngen (5) aufweist, die unter einem Abstand vom Käfigrahmen (1) in das Material des Kragens (4) geschnitten sind, so dass sie (5) nach einem Einsetzen des Käfigrahmens und des Stülpfilters in die Öffnung im Rohrboden (8) den Stülpfilter (7) gegen den Rand der Öffnung drücken und denselben gegen die untere Oberfläche des Rands der Öffnung im Rohrboden klemmen, und zwar mittels elastischen Rückfederns der Vorsprünge, die durch das Einsetzen des Käfigrahmens und des Stülpfilters in die Öffnung verformt worden sind.

2. Vorrichtung nach Anspruch 1, **dadurch gekennzeichnet, dass** die Reihe von Vorsprüngen (5) zumindest drei Vorsprünge umfasst.

3. Vorrichtung nach Anspruch 2, **dadurch gekennzeichnet, dass** die Reihe von Vorsprüngen (5) eine gleiche Anzahl von diametral gegenüberliegenden Vorsprüngen umfasst.

4. Vorrichtung nach Anspruch 1, **dadurch gekennzeichnet, dass** die Vorsprünge (5) im Wesentlichen auf dem Niveau des offenen Endes des Kragens beginnen und ihren maximalen Durchmesser nach einem Abstand erreichen, der im Wesentlichen gleich der Dicke des Rohrbodens (8) ist, so dass der Rohrboden zwischen dem angeflanschten Ende des Kragens (4) und einem Oberflächenteil des Vorsprungs eingeklemmt werden kann.

5. Vorrichtung nach Anspruch 1, **dadurch gekennzeichnet, dass** der Kragen (4) eine Struktur aufweist, die durch ein Metallblech, welches zu einem Zylinder gerollt ist, erreicht wird.

6. Vorrichtung nach Anspruch 1, **dadurch gekennzeichnet, dass** sie ein starres Element (9) aufweist, das entlang der Innenseite des Kragens (4) an der oberen Oberfläche gegenüber der mit dem Stülpfilter (7) in Kontakt stehenden Oberfläche gleitet, um gegen die Vorsprüngen (5) des Kragens (4) zu drücken, um den Stülpfilter (7) gegen den Rand des Rohrbodens (8) zu drücken und es in dieser Position eingeklemmt zu halten.

7. Vorrichtung nach Anspruch 6, **dadurch gekennzeichnet, dass** das starre Element (9) einen Körper mit einer sehr viel größeren Verformungsbeständigkeit als derjenigen der Vorsprünge (5) aufweist, die im oberen Teil des Kragens vorhanden sind.

8. Vorrichtung nach Anspruch 7, **dadurch gekennzeichnet, dass** das starre Element (9) ein an beiden Enden offener Metallzylinder ist, dessen Durchmesser etwas kleiner als derjenige der Öffnung des Rohrbodens (8) ist, in welche der Stülpfilter (7) eingesetzt werden muss, und dessen Länge zumindest gleich der Dicke des Rohrbodens ist.

9. Antikollabier-Käfigrahmen (1) zur Verwendung in der Filtervorrichtung nach den Ansprüchen 1 bis 8, aufweisend einen Stülpfilter (7) und einen darin eingesetzten Antikollabier-Käfigrahmen (1), wobei der Antikollabier-Käfigrahmen eine untere Struktur aus einem Metallstab und einem oberen Kragen (4) aufweist, **dadurch gekennzeichnet, dass** der Kragen (4) mit zumindest einer Reihe von elastisch verformbaren Vorsprüngen (5) ausgestattet ist, die unter einem Abstand von dem oberen angeflanschten Kragen am oberen Ende des Käfigrahmens (1) in das Material des Kragens (4) geschnitten sind und von der äußeren Oberfläche des Kragens (4) hervorstehen, um bei Verwendung eine luftdichte Abdichtung des Stülpfilters in einer Öffnung einer Filterplatte zu gewährleisten.

## Revendications

1. Dispositif de filtration pour filtrer l'air de manière à débarrasser les particules solides contenues dans celui-ci, comprenant une plaque porte-tube (8) et un filtre tubulaire (7) porté par une armature en cage anti-flambage (1), ladite armature en cage comprenant au niveau de son extrémité supérieure un collier à bride (4) pour forcer le filtre tubulaire contre la face supérieure du pourtour d'une ouverture dans ladite plaque porte-tube (8) dans laquelle ledit filtre tubulaire est introduit, **caractérisé en ce que** ledit collier (4) comporte au moins une série de saillies (5) déformables élastiquement découpées dans la matière dudit collier (4) à une certaine distance de ladite armature en cage anti-flambage (1), de sorte que, après insertion de ladite armature en cage et du filtre tubulaire dans ladite ouverture dans ladite plaque porte-tube (8), elles (5) forcent le filtre tubulaire (7) contre le bord de ladite ouverture et verrouillent celui-ci contre la face inférieure dudit pourtour de ladite ouverture dans la plaque porte-tube au moyen du retour élastique desdites saillies déformées en raison de ladite insertion de ladite armature en cage et du filtre tubulaire dans ladite ouverture.

2. Dispositif selon la revendication 1, **caractérisé en ce que** ladite série de saillies (5) comprend au moins trois saillies.

3. Dispositif selon la revendication 2, **caractérisé en ce que** ladite série de saillies (5) comprend un nombre égal de saillies diamétralement opposées.

4. Dispositif selon la revendication 1, **caractérisé en ce que** lesdites saillies (5) commencent sensiblement au niveau de l'extrémité ouverte du collier et atteignent leur diamètre maximum après une distance sensiblement égale à l'épaisseur de la plaque porte-tube (8) de sorte que la plaque porte-tube puisse être verrouillée entre l'extrémité à bride du collier (4) et une partie de la surface de la saillie.

5. Dispositif selon la revendication 1, **caractérisé en ce que** ledit collier (4) comprend une structure obtenue à partir d'une feuille de métal roulée pour former un cylindre.

6. Dispositif selon la revendication 1, **caractérisé en ce qu'**il comprend un élément rigide (9) coulissant longitudinalement à l'intérieur du collier (4) sur la face supérieure opposée à la face en contact avec le filtre tubulaire (7), afin de pousser contre les saillies (5) du collier (4) de sorte à forcer le filtre tubulaire (7) contre le bord de la plaque porte-tube (8) et à le maintenir verrouillé dans cette position.

7. Dispositif selon la revendication 6, **caractérisé en ce que** l'élément rigide (9) comprend un corps présentant une résistance à la déformation largement supérieure à celle des saillies (5) présentes dans la partie supérieure du collier.

8. Dispositif selon la revendication 7, **caractérisé en ce que** l'élément rigide (9) est un cylindre ouvert aux deux extrémités, dont le diamètre est légèrement inférieur à celui de l'ouverture de la plaque porte-tube (8) dans laquelle le filtre tubulaire (7) doit être introduit et dont la longueur est égale à l'épaisseur de ladite plaque porte-tube.

9. Armature en cage anti-flambage (1) prévue pour être utilisée dans le dispositif de filtration des revendications 1 à 8, comprenant un filtre tubulaire (7) et une armature en cage anti-flambage (1) introduite dans celui-ci, ladite armature en cage anti-flambage comprenant une structure inférieure en tiges métalliques et un collier supérieur (4), **caractérisée en ce que** le collier (4) est pourvu d'au moins une série de saillies (5) élastiquement déformables découpées dans la matière dudit collier (4) à une certaine distance du collier à bride au niveau de l'extrémité supérieure de l'armature en cage anti-flambage (1) et faisant saillie de la face externe dudit collier (4) afin d'assurer en utilisation une étanchéité à l'air du filtre tubulaire dans une ouverture d'une plaque filtrante.
